Europäisches Patentamt

**European Patent Office**

**Office européen des brevets**

(19)

(11) Veröffentlichungsnummer: **0 071 739**
**B1**

(12) **EUROPÄISCHE PATENTSCHRIFT**

(45) Veröffentlichungstag der Patentschrift:
**11.05.88**

(21) Anmeldenummer: **82105687.6**

(22) Anmeldetag: **26.06.82**

(51) Int. Cl.⁴: **G 01 B 3/00**, G 01 B 3/18

(54) Digitales elektrisches Längenmessgerät.

(30) Priorität: **11.08.81 DE 3131673**

(43) Veröffentlichungstag der Anmeldung:
**16.02.83 Patentblatt 83/7**

(45) Bekanntmachung des Hinweises auf die Patenterteilung:
**11.05.88 Patentblatt 88/19**

(84) Benannte Vertragsstaaten:
**AT CH FR GB IT LI NL SE**

(56) Entgegenhaltungen:
**DE - A - 3 227 089**
**DE - C - 238 610**
**FR - A - 1 351 834**
**GB - A - 2 066 959**
**US - A - 3 416 380**

(73) Patentinhaber: **Dr. Johannes Heidenhain GmbH,**
**Nansenstrasse 17, D-8225 Traunreut (DE)**

(72) Erfinder: **Oberhans, Johann, D-8221 Buchöster 36 (DE)**

EP 0 071 739 B1

## Beschreibung

Die Erfindung bezieht sich auf ein digitales elektrisches Längenmessgerät, insbesondere Bügelmessgerät, nach dem Oberbegriff des Anspruchs 1.

Es sind bereits Bügelmessgeräte bekannt. In der DE-B-2 413 997 ist eine Bügelmessschraube beschrieben, die mittels eines translatorisch arbeitenden Messumformers den aus der Relativbewegung der beiden Messflächen abgeleiteten Abstand der beiden Messflächen voneinander in digitaler Form zur Anzeige bringt. Die Relativbewegung der beiden Messflächen wird dabei – in bei Bügelmessschrauben üblicher Weise – von einer Spindel/Mutter-Anordnung vorgenommen, wobei der Anpressdruck der Messflächen an ein Messobjekt durch eine Ratsche einstellbar ist.

Eine ähnliche Anordnung ist in der DE-A-2 925 069 beschrieben, jedoch wird hier die Messung von einem rotatorisch arbeitenden Messumformer durchgeführt.

Derartige digitale elektrische Bügelmessschrauben haben den Nachteil, dass sie umständlich zu handhaben sind, wenn innerhalb ihres vorgegebenen Messbereiches Teile mit unterschiedlicher Länge gemessen werden sollen. In diesen Fällen muss jeweils die Verstellung innerhalb des Gesamtmessbereiches mühevoll über eine Spindel mit geringer Steigung erfolgen.

Darüber hinaus sind digitale elektrische Längenmessgeräte bekanntgeworden, die sich mittels einer direkten translatorischen Verschiebung des Messbolzens relativ schnell innerhalb ihres Messbereiches verstellen lassen. Die Entfernung des Messbolzens vom Amboss erfolgt dabei von der Bedienungsperson entgegen der Rückstellkraft einer Feder, die auch eine weitgehend konstante Messkraft liefert. Beispielhaft seien hier die GB-A-2 066 959, DE-A-2 731 294, CH-A-527 407 und die US-A-4 215 480 genannt, von denen die GB-A-2 066 959 bereits ein Messgerät mit Riegelgesperre zeigt, bei dem jedoch die Messkraft weiterhin durch eine Feder gebildet wird. Die Längenmessgeräte der letztgenannten Gerätegruppe beheben zwar den Nachteil der erstgenannten hinsichtlich der Schnellverstellung des Messbolzens innerhalb des Messbereiches, jedoch weisen sie im täglichen Werkstattgebrauch einen anderen gravierenden Nachteil auf, der den praktischen Einsatz derartiger Handmessgeräte im Alltagsbetrieb bislang sehr einschränkt. Beim Messen von schweren oder feststehenden Messobjekten, beispielsweise von in Werkzeugmaschinen eingespannten Werkstücken, ist es in der Praxis nicht möglich, das Messgerät von Hand so ruhig an den zu messenden Flächen zu halten, dass ein eindeutiges Messergebnis an der Anzeige ablesbar ist. Schon das geringste Verkanten des Handmessgerätes führt zu einer Verschiebung des Messbolzens und damit zu einem veränderten Messwert. Erkennbar ist dies an der sich ständig verändernden Anzeige. Lediglich kleine Messobjekte, die sich zwischen die Messflächen des Ambosses und des Messbolzens spannen lassen, können exakt gemessen werden, wenn die Rückstellkraft der den Messbolzen gegen den Amboss drückenden Feder gross genug ist, um ein Messobjekt zwischen den Messflächen festzuhalten.

Diese Handhabungsnachteile sind bekannt und haften den bekannten Handmessgeräten an.

Es ist Aufgabe der Erfindung, ein Längenmessgerät zu schaffen, das die vorstehend genannten Nachteile nicht aufweist, das sowohl im gesamten Messbereich schnell verstellbar sein soll und das dennoch das exakte Messen auch von feststehenden Messobjekten ermöglicht, und das eine sichere Ablesung des Messergebnisses gewährleistet.

Diese Aufgabe wird erfindungsgemäss durch die Merkmale des Anspruchs 1 gelöst.

Die vorteilhafte Ausgestaltung der Erfindung ist Gegenstand der abhängigen Ansprüche.

Anhand eines Ausführungsbeispiels wird die Erfindung noch näher erläutert.

Es zeigt:

Fig. 1 den schematischen Aufbau eines Bügelmessgerätes,

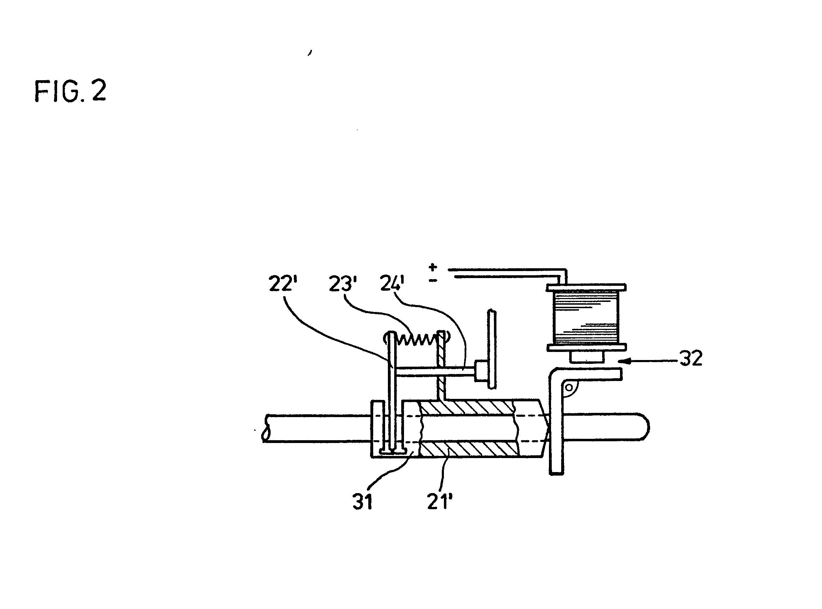

Fig. 2 eine elektromagnetisch betriebene Feststelleinrichtung,

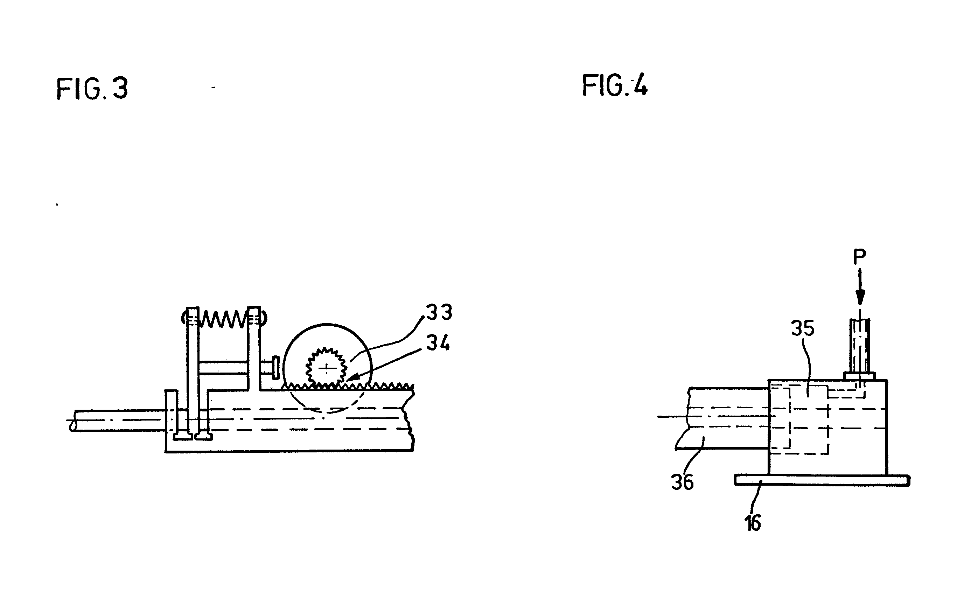

Fig. 3 eine elektromotorisch betriebene Feststelleinrichtung,

Fig. 4 eine pneumatisch betriebene Feststelleinrichtung.

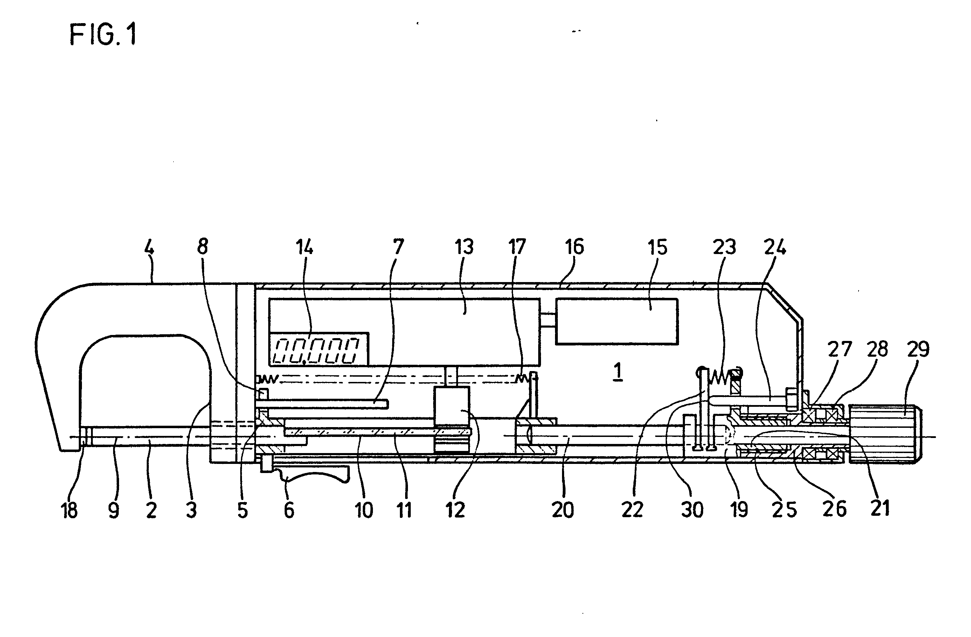

In der Fig. 1 ist ein Handmessgerät 1 dargestellt, das einen in Längsrichtung stufenlos verschiebbaren Messbolzen 2 aufweist. Der Messbolzen 2 ist in einem Schenkel 3 eines Bügels 4 exakt geführt. Der Messbolzen 2 ist in einem Aufnehmer 5 befestigt, der sowohl ein Zugelement 6 zur Längsverschiebung des Messbolzens 2 aufweist, als auch im Zusammenwirken mit einer Führungsstange 7 und einer an dieser Führungsstange 7 geführten Führungsbuchse 8 eine Verdrehsicherung für den Messbolzen 2 darstellt. Die Führungsstange 7 verläuft parallel zur Längsrichtung des Messbolzens 2.

In der geradlinigen Verlängerung der Längsachse 9 des Messbolzens 2 befindet sich eine Gitterteilung 10 eines fotoelektrischen Messumformers. Eine gläserne Massverkörperung 11 trägt die Gitterteilung 10, die von einer Abtasteinrichtung 12 fotoelektrisch abgetastet wird.

Der Messumformer kann auch in anderer Technik aufgebaut sein. So ist es beispielsweise im Rahmen der Erfindung möglich, induktive, kapazitive, magnetische oder andere Messumformer einzusetzen. Ebenso ist es nicht erforderlich, dass der Messumformer translatorisch arbeitet, denn es gehört zum Wissen des Fachmannes, eine translatorische Bewegung des Messbolzens 2 mit Hilfe geeigneter Mittel auf einen rotatorisch arbeitenden Messumformer zu übertragen.

Die fotoelektrisch gewonnenen Messsignale werden einer Auswerteschaltung 13 zugeführt, die die Messsignale in bekannter Weise aufbereitet und als Messwert zur Anzeige 14 bringt. Die Auswerteschaltung 13 kann selbstverständlich auch ausserhalb des Handmessgerätes 1 angeordnet sein, was auch für die Stromversorgung 15 zutrifft, die im Ausführungsbeispiel aus Silberzink-Akkumulatoren besteht und ebenso wie die Auswerteschaltung 13 innerhalb des Handgriffes 16 angeordnet ist, um die Auswerteschaltung 13 mit Energie zu versorgen.

In der Ruhestellung hält eine Feder 17 den Messbolzen 2 in Kontakt mit einem Amboss 18. Mit Hilfe des Zugelements 6 kann der Messbolzen 2 vom Amboss 18 stufenlos wegbewegt werden. Der Messumformer 10, 11, 12 ermittelt aus der Bewegung des Messbolzens 2 vom Amboss 18 weg den Messweg, der in Ziffernform in der Anzeige 14 erscheint.

Beim Messen von Werkstücken soll die auf das Messobjekt einwirkende Messkraft konstant sein. Über die Rückstellfeder 17 ist diese Bedingung nur näherungsweise zu erfüllen, was auch für die schnell verstellbaren Handmessgeräte gemäss Stand der Technik gilt. Des weiteren kann die Rückstellkraft der Feder 17 am Messbolzen 2 nicht beliebig gross gemacht werden, da dies den Bedienungskomfort erheblich beeinträchtigen würde. Die Anpresskräfte am Messobjekt bewegen sich in der Praxis in der Grössenordnung von wenigen N (Newton). Bei Anpresskräften dieser Grössenordnung ist ein Verkanten des Handmessgerätes 1 bei den gegebenen Übersetzungsverhältnissen kaum zu vermeiden.

Das Handmessgerät 1 weist aus diesem Grunde ein Klemmgesperre 19 auf, das den Messbolzen 2 in der endgültigen Messstellung am Messobjekt festklemmt. In Verlängerung des Messbolzens 2 ist in seiner Längsachse 9 eine Stange 20 angeordnet. Bei Bewegungen des Messbolzens 2 vom Amboss 18 weg taucht die Stange 20 in eine Buchse 21 ein. Die Buchse 21 weist an ihrem einen Ende eine federbelastete Zunge 22 auf, die in Ruhestellung von einer Feder 23 gegen einen einstellbaren Anschlag 24 gezogen wird. Bei entsprechender Materialauswahl und Ausgestaltung der Zunge 22 kann die Feder 23 entfallen, wenn die Zunge 22 mit ausreichender Vorspannung eingebaut wird. Am anderen Ende der Buchse 21 ist auf dem äusseren Umfang ein Gewinde 25 angeordnet, das von einer Überwurfmutter 26 umgeben ist. Die Überwurfmutter 26 ist in dem Handgriff 16 mit Hilfe von Kugellagern 27, 28 ortsfest aber drehbar gelagert und weist an ihrem freien Ende einen Drehknopf 29 auf, der über eine Ratsche mit der Überwurfmutter 26 verbunden ist. Mit der Ratsche im Drehknopf 29 kann die Anpresskraft des Messbolzens 2 an das Messobjekt exakt eingestellt werden. Die Anpresskraft soll so gross gewählt werden, dass sich die Messflächen von Messbolzen 2 und Amboss 18 in jedem Fall exakt parallel zueinander ausrichten und dass das Handmessgerät 1 frei, d.h. ohne manuellen Halt an dem Messobjekt festklemmbar ist. Damit ist eine weitestgehend konstante Anpresskraft gewährleistet, und ein Verkanten des Handmessgerätes 1 bei der Messung scheidet aus.

Diese fehlersichere Handhabung von Handmessgeräten ist von Werkstattmessgeräten wie Bügelmessschrauben bekannt und gebräuchlich. Jedoch muss bei Bügelmessschrauben wie eingangs erwähnt, mühsam mit Hilfe einer Spindel geringer Steigung der gesamte Messbereich durchdreht werden, wenn Messobjekte mit stark differierenden Dimensionen gemessen werden sollen.

Hier soll ein Messvorgang mit dem erfindungsgemässen Längenmessgerät in seiner Einfachheit und mit seinen Vorteilen gegenüber den Messgeräten nach dem Stande der Technik erläutert werden.

Die Bedienungsperson nimmt das Handmessgerät 1 in beide Hände und schaltet das Gerät ein. Für den Eichvorgang wird nun mit einer Hand der Drehknopf 29 mit der Ratsche in Drehung versetzt, bis er infolge der Drehmomentbegrenzung der Ratsche durchrutscht. Bei der anfänglichen Drehung wird von der Überwurfmutter 26 die Buchse 21 geringfügig in Richtung Amboss 18 verschoben. Da die federbelastete Zunge 22 an dem Anschlag 24 anliegt, wird sie bei der Bewegung der Buchse 21 in Richtung Amboss 18 um den Anlagepunkt 30 herum geringfügig gekippt und klemmt dadurch die Stange 20 fest, die dadurch ebenfalls geringfügig in Richtung Amboss 18 verschoben wird. Da jedoch in der Grundstellung die Feder 17 den Messbolzen 2 bereits gegen den Amboss 18 gezogen hat, wird diese weitere Bewegung der Stange 20, die starr mit dem Messbolzen 2 in dessen Längsachse 9 verbunden ist, den Messbolzen 2 nur noch ganz geringfügig in Richtung Amboss 18 auslenken. Dieser Auslenkung stellt sich der Bügel 4 entgegen, der geringfügig – entsprechend der an der Ratsche eingestellten Anpresskraft – verbogen wird.

Diese geringfügige Verbiegung des Bügels 4 wird bei jeder Messung auftreten, da ja die mit Hilfe der Ratsche eingestellte Anpresskraft bei jeder Messung gleich ist. Durch die Kippung der Zunge 22 ist in dieser Stellung die Stange 20 und damit der Messbolzen 2 mit hoher Steifigkeit in Längsrichtung festgeklemmt. In dieser Phase ist der Eichvorgang beendet, wenn die Bedienungsperson nun die Auswerteschaltung 13 und damit die Anzeige 14 auf Null stellt. Für diese Nullsetzung ist in bekannter Weise eine Nullungstaste vorgesehen, die nicht extra dargestellt werden muss, wie auch das Ein- und Ausschalten über entsprechende Betätigungselemente als zum Selbstverständlichen gehörig betrachtet wird, und zeichnerisch nicht dargestellt zu werden braucht.

Mit dem vorbeschriebenen Eichvorgang ist die aufgrund der Messkraft (Anpresskraft) immer auftretende Verbiegung des Bügels 4 aus den nachfolgenden Messungen eliminiert.

Durch geringfügiges Drehen des Ratschendrehknopfes 29 in die Gegenrichtung zieht die Überwurfmutter 26 die Buchse 21 in Richtung vom Amboss 18 weg, die Zunge 22 kippt in ihre Grundstellung zurück und die Klemmung der Stange 20 ist gelöst.

Nun kann die Bedienungsperson mit Hilfe des Zugelementes 6 den Messbolzen 2 gegen die relativ geringe Rückstellkraft der Feder 17 sehr schnell und sehr leicht innerhalb des gesamten Messbereiches in der Längsrichtung verschieben und ein im Rahmen des Messbereiches beliebig grosses Messobjekt antasten. Dies kann mit einer Hand geschehen. Nach dem Antasten des Messobjektes wird mit Hilfe der zweiten Hand der Ratschendrehknopf 29 bis zum Durchrutschen verdreht, und das Messobjekt wird mit der vorbestimmten Anpresskraft zwischen den Messflächen des Ambosses 18 und des Messbolzens 2 festgeklemmt. Nun kann die Bedienungsperson den Messwert an der Anzeige 14 ablesen, der sich nicht verändert, weil das Handmessgerät 1 am Messobjekt nicht manuell verkantet wird.

Der vorbeschrieben Ratschenmechanismus kann in vorteilhafter Weise durch eine elektromagnetische Feststelleinrichtung 31 ersetzt werden, die im Prinzip die gleichen Klemmelemente 21', 22', 23', 24' aufweist. Lediglich die Vortriebseinrichtung für die Buchse 21' wird von einer an sich bekannten elektromagnetischen Einrichtung 32 realisiert. Diese Anordnung hat den Vorteil, dass die Klemmung des Messbolzens 2 vom Zugelement 6 aus ferngesteuert vorgenommen werden kann, so dass eine Einhandbedienung möglich ist. Der Nachteil des höheren Stromverbrauches für die elektromagnetische Klemmung kann dabei in Kauf genommen werden und ist bei Betrieb mit externer Energieversorgung über ein Netzteil ohne Bedeutung.

In ähnlicher Weise kann die Feststelleinrichtung elektromotorisch mittels Elektromotor 33 und Getriebe 34 oder pneumatisch mittels Druckluft P festgeklemmt werden, die in den Hohlraum eines Ringzylinders 35 einströmt und einen ringförmigen Kolben 36 in Längsrichtung bewegt.

Das Klemmgesperre 19, 31 muss nicht über eine federbelastete Zunge 22, 22' auf den Messbolzen 2 einwirken, der Fachmann kann auch andere Klemmgesperre wie z.B. Exzenter vorsehen. Es liegt auch im Rahmen der Erfindung, den Messbolzen 2 direkt festzuklemmen, wenn beispielsweise eine Klemmvorrichtung der vorbeschriebenen Art im Schenkel 3 des Bügels 4 angeordnet ist. Der Fachmann wird nach den vorgegebenen Geräteabmessungen und Einsatzzwecken des Handmessgerätes 1 die sinnvollste räumliche Bauform erstellen, ohne den Rahmen der Erfindung zu verlassen.

Es versteht sich, dass beim Messen von kleinen und leichten Messobjekten wie z.B. Passstiften das Klemmgesperre 19, 31 nicht benutzt wird, wenn die Rückstellkraft der Feder 17 zum Klemmen des Messobjektes zwischen den Messflächen von Amboss 18 und Messbolzen 2 ausreicht. Hier wird dann auch die Eichung bei nicht betätigtem Klemmgesperre 19, 31 vorgenommen, da nur die Kräfte der Feder 17 auf den Bügel 4 einwirken.

## Patentansprüche

1. Digitales elektrisches Längenmessgerät, insbesondere Bügelmessgerät mit einem in Längsrichtung stufenlos, unmittelbar translatorisch verschiebbaren Messbolzen (2) und einem vom Messbolzen beaufschlagten Messumformer (10–12), der an eine Auswerteschaltung (13) anschliessbar ist, dadurch gekennzeichnet, dass der Messbolzen (2) mit einer einstellbaren, die Messkraft bestimmenden Reibungskupplung (25, 26) in Wirkverbindung steht, und bei vorbestimmter Messkraft in seiner Mess- bzw. Eichstellung durch ein Klemmgesperre (19, 31), das direkt zwischen den Messbolzen (2) und die Reibungskupplung (25, 26) geschaltet ist, stufenlos, in Messrichtung steif festklemmbar ist.

2. Digitales elektrisches Längenmessgerät nach Anspruch 1, dadurch gekennzeichnet, dass das Klemmgesperre (19, 31) über ein Klemmelement in Form einer kippbaren Zunge (22, 22') verfügt, die durch geringfügige Bewegung eines längsverschieblichen Elementes in Form einer Buchse (21, 21') eine auf den Messbolzen (2) direkt oder indirekt einwirkende Stange (20) festklemmt oder freigibt.

3. Digitales elektrisches Längenmessgerät nach Anspruch 1 und 2, dadurch gekennzeichnet, dass die Buchse (21, 21') mittels eines die einstellbare Reibungskupplung aufweisenden Drehknopfes (29) über die Reibungskupplung, die in Form einer Spindel/Mutter-Anordnung (25, 26) ausgebildet ist, geringfügig längsverschieblich ist.

4. Digitales elektrisches Längenmessgerät nach Anspruch 1 und 2, dadurch gekennzeichnet, dass die Buchse (21, 21') mittels einer elektromagnetischen Einrichtung (32) geringfügig längsverschieblich ist.

5. Digitales elektrisches Längenmessgerät nach Anspruch 1 und 2, dadurch gekennzeichnet, dass die Buchse (21, 21') mittels eines auf ein Getriebe (34) einwirkenden Elektromotors (33) geringfügig längsverschieblich ist.

6. Digitales elektrisches Längenmessgerät nach Anspruch 1 und 2, dadurch gekennzeichnet, dass die Buchse (21, 21') mittels einer pneumatischen Zylinder/Kolben-Anordnung (35, 36) geringfügig längsverschieblich ist.

7. Digitales elektrisches Längenmessgerät nach den Ansprüchen 1, 2, 4, 5 und 6, dadurch gekennzeichnet, dass das Klemmgesperre (19, 31) vom Zugelement (6) ferngesteuert betätigbar ist.

## Claims

1. Digital electrical length measuring apparatus, especially external micrometer with a measuring spindle displaceable in longitudinal direction steplessly and directly by translation, and a measuring transducer acted upon by the measuring spindle, which is connectible to an evaluating circuit, characterised in that the measuring spindle (2) is operatively connected to an adjustable friction coupling (25, 26) determining the measuring force, and can be clamped steplessly, with a predetermined measuring force in its measuring or calibration position by a clamping detent (19, 31), which is connected directly between the measuring spindle (2) and the friction coupling (25, 26).

2. Digital electrical length measuring apparatus according to claim 1, characterised in that the clamping detent (19, 31) is arranged as a clamping element in the form of a tilting tongue (22, 22'), which clamps or frees a rod (20) acting directly or indirectly on the measuring spindle (2) through small movement of a longitudinal displaceable element in the form of a bush (21, 21').

3. Digital electrical length measuring apparatus according to claim 1 and 2, characterised in that the bush (21, 21') is longitudinally displaceable slightly by means of a rotatable knob (29) with an adjustable friction coupling, by way of a spindle/nut arrangement (25, 26).

4. Digital electrical length measuring apparatus according to claim 1 and 2, characterised in that the bush (21, 21') is longitudinally displaceable slightly by means of an electromagnetic device (32).

5. Digital electrical length measuring apparatus according to claim 1 and 2, characterised in that the bush (21, 21') is longitudinally displaceable slightly by means of an electric motor (33) acting on a gear (34).

6. Digital electrical length measuring apparatus according to claim 1 and 2, characterised in that the bush (21, 21') is longitudinally displaceable slightly by means of a pneumatic cylinder/piston arrangement (35, 36).

7. Digital electrical length measuring apparatus according to claims 1, 2, 4, 5 and 6, characterised in that the clamping detent (19, 31) is remotely operable from the tractive element (6).

**Revendications**

1. Dispositif électrique numérique de mesure de longueur, notamment appareil de mesure du type à arceau, comportant une tige de mesure déplaçable en translation sans discontinuité, en direction longitudinale, et, attaqué par cette tige de mesure, un convertisseur de mesure apte à être raccordé à un circuit d'interprétation, caractérisé par le fait que la tige de mesure (2) est fonctionnellement associée à un accouplement à friction (25, 26), réglable, déterminant la force de mesure, et, en présence d'une force de mesure prédéterminée, est bloquée sans à-coups, dans la direction de mesure, à sa position de mesure ou d'étalonnage, par un organe de blocage par serrage (19, 31) monté pour agir directement entre la tige de mesure (2) et l'accouplement à friction (25, 26).

2. Dispositif électrique numérique de mesure de longueur selon revendication 1, caractérisé par le fait que l'organe de blocage par serrage (19, 31) dispose d'un élément de serrage sous la forme d'une languette basculable qui, sous l'effet d'un petit déplacement d'un élément mobile longitudinalement, réalisé sous la forme d'un manchon (21, 21'), bloque ou libère une tige (20) agissant directement ou indirectement sur la tige de mesure (2).

3. Dispositif électrique numérique de mesure de longueur selon revendications 1 et 2, caractérisé par le fait que le manchon (21, 21') peut être légèrement longitudinalement, par l'intermédiaire d'un agencement broche/écrou (25, 26), au moyen d'un bouton tournant (29) présentant un accouplement à friction réglable.

4. Dispositif électrique numérique de mesure de longueur selon revendications 1 et 2, caractérisé par le fait que le manchon (21, 21') peut être légèrement déplacé longitudinalement au moyen d'un dispositif électromagnétique (32).

5. Dispositif électrique numérique de mesure de longueur selon revendications 1 et 2, caractérisé par le fait que le manchon (21, 21') peut être légèrement déplacé longitudinalement au moyen d'un moteur électrique (33) agissant sur une transmission (34).

6. Dispositif électrique numérique de mesure de longueur selon revendications 1 et 2, caractérisé par le fait que le manchon (21, 21') peut être légèrement déplacé longitudinalement au moyen d'un agencement cylindre/piston (35, 36).

7. Dispositif électrique numérique de mesure de longueur selon les revendications 1, 2, 4, 5 et 6, caractérisé par le fait que l'actionnement de l'organe de blocage par serrage (19, 31) peut être commandé à distance, depuis l'élément de traction (6).

# FIG.1

0 071 739

FIG. 2

# FIG. 3

# FIG. 4